# EUROPEAN PATENT APPLICATION

(11) **EP 4 478 337 A1**
(43) Date of publication of application: **18.12.2024**
(21) Application number: 23753050.6
(22) Date of filing: 31.01.2023
(51) Int. Cl.: G09B 17/00, G09B 19/06, G06F 40/126, G06F 40/109, G06F 40/58, G06F 16/33, G06F 3/04855

(54) **TERMINAL FOR EXECUTING KOREAN READING PROGRAM AND OPERATION METHOD THEREFOR**

(30) Priority: 09.02.2022 KR 20220016657
(71) Applicant: Kacen Co., Ltd., Paju-si, Gyeonggi-do 10861 (KR)
(72) Inventor: PARK, Won Hee, Paju-si Gyeonggi-do 10861 (KR)
(74) Representative: Jung, Minkyu
(86) International application number: PCT/KR2023/001410
(87) International publication number: WO 2023/153699

(57) **Abstract**

A terminal device for executing a Korean reading program, according to an embodiment of the present invention, comprises: a word search and identification unit that provides a word search and identification interface that supports a field-specific category and a translated word of a word of interest specified by a user from among English words belonging to the field-specific category and supports the translated word to be flickered and displayed, or a color of the translated word to vary within a rectangular border; a phoneme combination unit that interworks with the word search and identification unit, and provides a phoneme combination interface that supports information regarding a combination step (order) of phonemes for syllables of the translated word and pronunciation information and phonetic symbols regarding the phonemes and syllables, so as to be output; and a combination exercise unit that generates syllables by combining phoneme key information input via an interface provided by the phoneme combination unit, and combines the generated syllable information into a word.

## Description

### Technical Field

The present invention relates to a terminal for executing Korean reading program and operation method therefor.

### Background Art

Reading is the first step in language learning, and Korean is easy to learn because of its scientific and easy combination of phonemes (consonants and vowels), but because consonants and vowels are arranged along the horizontal and vertical axes, respectively, and only the combination of consonant (initial consonant) + vowel (middle) is shown, existing learning alphabet tables require complicated explanations to explain last consonants, so instructors have difficulty starting from this point.

Additionally, regular smartphone keyboards have the problem of having to press the keyboard multiple times to display one consonants and vowel phoneme.

Accordingly, the present invention is to propose a device and method that first presents English words whose meanings are already known to foreign beginners when they begin learning Korean syllables and combines Korean syllables and words for them to enable quick logical and emotional understanding, and in particular, provides a number of examples of Koreanized English to compare the known native English language pronunciation with the Koreanized pronunciation, thereby promoting understanding of pronunciation.

### [Prior art literature]

### [Patent Document]

Korean Patent Laid-Open No. 2018-0095314 (Title: education system for reading korean based on phoneme image and phoneme analysis algorithm)

### Disclosure

### Technical Problem

The purpose of the present invention is to provide a terminal for executing Korean reading program and operation method therefor in order to address the issues of the prior art.

### Technical Solution

In order to address the above issues, a terminal for executing Korean reading program according to an embodiment of the present invention includes a word search and identification unit providing a word search and identification interface to support a field-specific category and a translated word of a word of interest specified by a user from among English words belonging to the field-specific category and to support the translated word to be flickered and displayed, or a color of the translated word to vary within a rectangular border; a phoneme combination unit interworking with the word search and identification unit and providing a phoneme combination interface to support information regarding a combination step (order) of phonemes for syllables of the translated word and pronunciation information and phonetic symbols regarding the phonemes and syllables to be output; and a combination exercise unit combining phoneme key information input via an interface provided by the phoneme combination unit to generate syllables and combining the generated syllable information into a word.

In an embodiment, the word search and identification interface supports a up and down scroll bar to allow the user to select a desired word through the scroll bar.

In an embodiment, the phoneme combination unit changes key color for phonemes that are sequentially combined, provides pronunciations of the phonemes that vary, extracts and provides phonetic symbols and pronunciation information for the syllable in which the respective phonemes are combined from the storage unit, and extracts and provides phonetic symbols and pronunciation information of words combined into syllables from the storage unit.

In an embodiment, the phoneme combination interface supports identification item information to identify single consonants (SC), double consonants (DC), single vowels (SV), and double vowels (DV) for each syllable phoneme of the translated word searched in a word search interface.

In an embodiment, the combination exercise unit combines the phoneme key information input through the phoneme combination interface to generates syllables and provides information of the generated syllable to a word search unit, and the word search and identification interface displays words that are a combination of one or more phoneme keys input.

In an embodiment, the phoneme combination interface includes a first display area, a second display area, and a third display area, and the first display area is an area where consonants used as initial consonants are displayed, and single consonants and compound consonants supporting different colors are displayed, the second display area is an area where middle vowels are displayed, and single vowels and double vowels supporting different colors are displayed, the third display area is an area where consonants used as last consonants are displayed, and single consonants and compound consonants supporting different colors are displayed, and the third display area is an area that displays and distinguishes 11 secondary double consonants in different colors, the 11 secondary double consonants being not used as initial consonants but only used as last consonants.

### Advantageous Effects

A terminal for executing Korean reading program and operation method therefor according to an embodiment of the present invention provides the advantage of enabling accurate Korean pronunciation and reading by informing how to combine Korean (words) (phoneme → syllable → word) and English phonetic symbols for phonemes and syllables and teaching how to notate a foreign language in Korean and hearing the pronunciation according to the notating.

Through the above-mentioned advantages, it provides the advantage of being able to learn Korean more effectively for foreigners.

### Description of Drawings

FIG. 1 is a block diagram of a terminal device for executing Korean reading program according to an embodiment of the present invention.
FIG. 2 is a detailed configuration of the control unit shown in FIG. 1.
FIG. 3 is an exemplary view of an execution screen of the Korean reading program executed on the terminal device of FIG. 1.

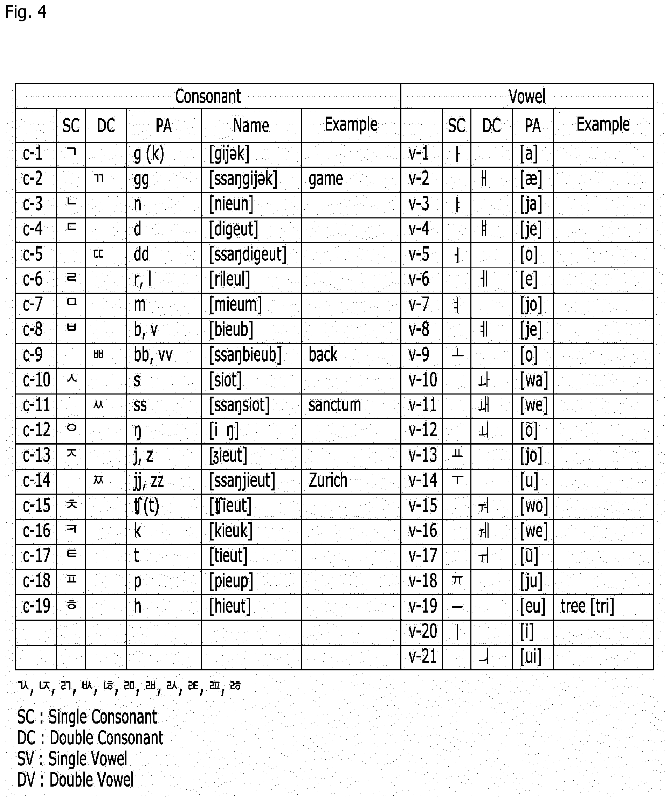

FIG. 4 is a reference table showing the names of Korean consonants and vowels and English phonetic symbols.

### Mode for Invention

The Hereinafter, with reference to the accompanying drawings, embodiments of the present invention will be described in detail so that those skilled in the art can easily carry out the present invention. However, the present invention may be embodied in many different forms and is not limited to the embodiments described herein. In order to clearly describe the present invention in the drawings, parts irrelevant to the description are excluded, and similar reference numerals are assigned to similar parts throughout the specification.

Throughout the specification, when a part is said to be "connected" to another part, this includes not only the case of being "directly connected" but also the case of being "electrically connected" with another part in between. Further, it should be understood that when a part "includes" a certain component, this means that it may further include other components, not excluding other components, unless otherwise stated, and the presence or addition of one or more other features, numbers, steps, operations, components, parts, or combinations thereof is not precluded.

As used throughout the specification, the terms of degrees such as "about", "substantially", etc. are used in the meaning of a referenced value at or close to that value when inherent manufacturing and material tolerances are given, and they are used to prevent undue exploitation of the disclosure in which exact or absolute figures are recited to aid in the understanding of the present invention by unscrupulous infringers. The term "step of (doing)" or "step of" used throughout the specification of the present invention does not mean "step for."

In this specification, the term "unit" includes a unit realized by hardware, a unit realized by software, and a unit realized using both. Further, one unit may be realized using two or more hardware, and two or more units may be realized by one hardware. Meanwhile, the term '∼ unit' is not limited to software or hardware, and '∼ unit' may be configured to be in an addressable storage medium or configured to reproduce one or more processors. Thus, as an example, '-unit' includes components such as software components, object-oriented software components, class components, and task components, processes, functions, properties, procedures. subroutines, segments of program code, drivers, firmware, microcode, circuitry, data, databases, data structures, tables, arrays and variables. Functions provided within components and '-units' may be combined into smaller numbers of components and '-units' or further separated into additional components and '-units.' In addition, components and '-units' may be implemented to play one or more CPUs in a device or a secure multimedia card.

In this specification, some of the operations or functions described as being performed by a terminal, apparatus, or device may be performed instead by a server connected to the terminal, apparatus, or device. Likewise, some of the operations or functions described as being performed by the server may also be performed by a terminal, apparatus, or device connected to the server.

In this specification, some of the operations or functions described as mapping or matching with the terminal may be interpreted as meaning mapping or matching with terminal's unique number or personal identification information, which is identifying data of a terminal.

Hereinafter, with reference to the attached drawings, a terminal for executing Korean reading program and operation method therefor according to an embodiment of the present invention is described in more detail.

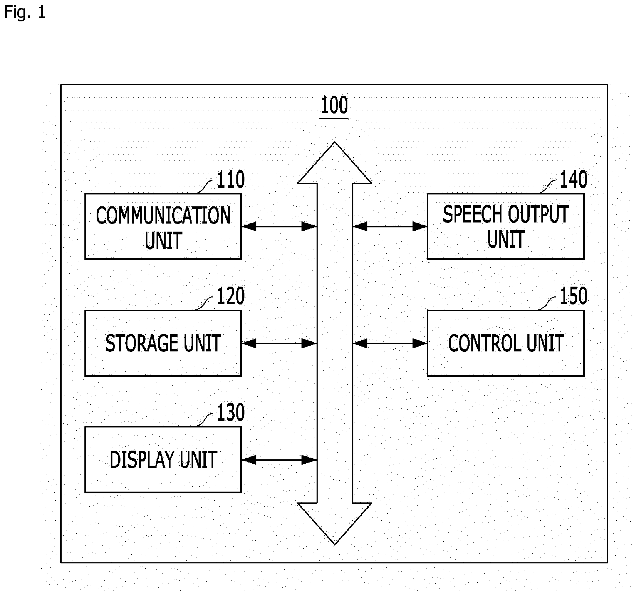

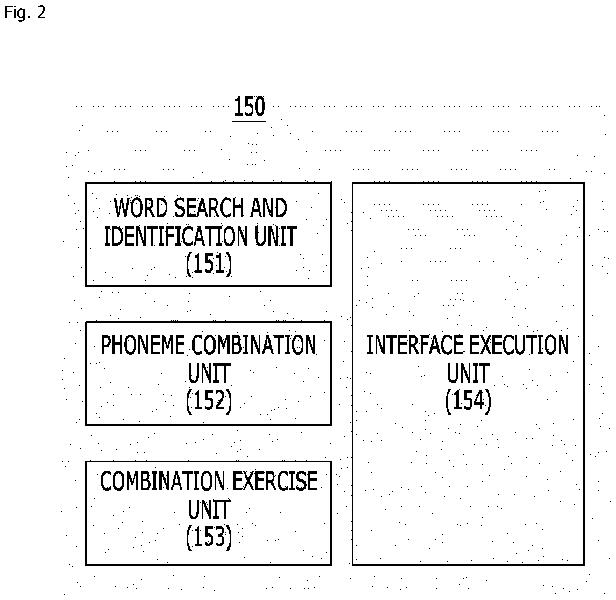

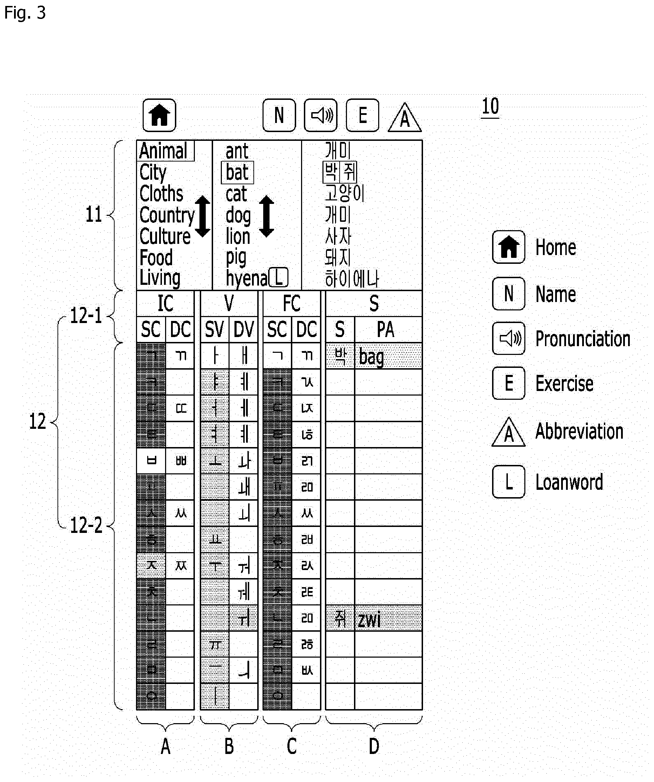

FIG. 1 is a block diagram of a terminal device for executing Korean reading program according to an embodiment of the present invention, FIG. 2 is a detailed configuration of the control unit shown in FIG. 1, and FIG. 3 is an exemplary view of an execution screen of the Korean reading program executed on the terminal device of FIG. 1.

First, as shown in FIG. 1, the terminal (100) for executing Korean reading program according to an embodiment of the present invention includes a communication unit (110), a storage unit (120), a display unit (130), and a speech output unit (140) and a control unit (150).

Not all components of the terminal device (100) for executing Korean reading program shown in FIG. 1 are essential components, the terminal device (100) for executing Korean reading program may be implemented with more components than those shown in FIG. 1, and the terminal device (100) for executing Korean reading program may be implemented with fewer components than those shown in FIG. 1.

The terminal device (100) for executing Korean reading program can be applied to various terminals such as a smart phone, a portable terminal, a mobile terminal, a foldable terminal, a personal digital assistant (PDA), a portable multimedia player (PMP) terminal, a telematics terminal, a navigation terminal, a personal computer, a notebook personal computer, a slate personal computer, a tablet personal computer, a ultrabook, wearable device including, for example, smartwatch, smart glass, head mounted display (HMD), Wibro terminal, Internet protocol television (IPTV), a smart television , a digital broadcasting terminal, an audio video navigation (AVN) terminal, an audio/video (A/V) system, a flexible terminal, a digital signage device, and the like.

The communication unit (110) communicates with any internal component or at least one external terminal through a wired/wireless communication network. At this time, the external arbitrary terminal may include a server (not shown), another terminal (not shown), etc. Here, wireless Internet technologies include wireless LAN (WLAN), digital living network alliance (DLNA), wireless broadband (Wibro), world interoperability for microwave access (Wimax), high speed downlink packet access (HSDPA), high speed uplink packet access (HSUPA), IEEE 802.16, long term evolution (LTE), long term evolution-advanced (LTE-A), wireless mobile broadband service (WMBS), etc. , and the communication unit 110 transmits and receives data according to at least one wireless Internet technology within a range including Internet technologies not listed above. Further, short-range communication technologies may include Bluetooth, radio frequency identification (RFID), infrared data association (IrDA), ultra wideband (UWB), ZigBee, and near field communication (NFC), ultra sound communication (USC), visible light communication (VLC), Wi-Fi, Wi-Fi Direct, and the like may be included. Further, wired communication technologies may include power line communication (PLC), USB communication, Ethernet, serial communication, optical/coaxial cables, and the like.

Further, the communication unit 110 may transmit information to and from any terminal through a universal serial bus (USB).

In addition, the communication unit 110 transmits and receives wireless signals to a base station, the server, and other terminals on a mobile communication network (for example, global system for mobile communication (GSM), code division multi access (CDMA), code division multi access 2000 (CDMA2000), Enhanced Voice-Data Optimized or Enhanced Voice-Data Only (EV-DO), wideband CDMA (WCDMA), high speed downlink packet access (HSDPA), high speed uplink packet access (HSUPA), long term evolution (LTE), long term evolution-advanced (LTE-A), 5G, etc.) established according to technical standards or communication methods for mobile communication.

Further, the communication unit (110) receives data related to the Korean reading program app, i.e., the corresponding app., provided from a server connected through wired/wireless communication under the control of the control unit (150).

The storage unit (120) stores various user interfaces (UIs), graphic user interfaces (GUIs), etc.

Further, the storage unit (120) stores data and programs necessary for the operation of the terminal device (100) for executing Korean reading program.

That is, the storage unit 120 stores a plurality of application programs (for example, an application program or app.) running on the terminal device (100) for executing Korean reading program, or data or instructions for the operation of the terminal device 100 executing the Korean reading program. At least some of these applications may be downloaded from an external server via wireless communication. In addition, at least some of these application programs may exist on the terminal device (100) for executing Korean reading program from the time of factory for the basic functions of the terminal device (100) for executing Korean reading program. Meanwhile, the application program is stored in the storage unit (120) and installed on the terminal device (100) for executing Korean reading program, and it may be driven by the control unit (150) to perform the operation (or function) of the terminal device (100) for executing Korean reading program.

Further, the storage unit (120) may include at least one storage medium of flash memory type, hard disk type, multimedia card micro type, and card type memory (e.g., SD or XD memory, etc.), magnetic memory, magnetic disk, optical disk, random access memory (RAM), static random access memory (SRAM), read-only memory (ROM), electrically erasable programmable read-only memory (EEPROM), and programmable read-only memory (PROM). In addition, the terminal device (100) for executing Korean reading program may operate web storage that performs the storage function of the storage unit (120) on the Internet or may operate in relation to the web storage.

Further, the storage unit (120) stores data related to the received Korean reading program, i,e., the corresponding app., under the control of the control unit (150).

The display unit (130) uses the user interface and/or graphic user interface stored in the storage unit (120) and the control unit (150) under the control of the control unit (150) to display a variety of content such as various menu screens.

Here, the content displayed on the display unit (130) includes various text or image data (including various information data) and a menu screen including data such as icons, list menus, and combo boxes. Further, the display unit (130) may be a touch screen.

In addition, the display unit (130) may include at least one of a liquid crystal display (LCD), a thin film transistor-liquid crystal display (TFT LCD), an organic light-emitting diode (OLED), a flexible display, a 3D display, an e-ink display, and a light emitting diode (LED).

Further, the display unit (130) displays a screen of results of executing the Korean reading program under the control of the control unit (150).

The speech output unit 140 outputs speech information included in a signal processed as a predetermined signal by the control unit (150). Here, the speech output unit (140) may include a receiver, speaker, buzzer, etc.

Further, the speech output unit (140) outputs a speech guidance generated by the control unit (150).

Further, the speech output unit (140) outputs speech information (or sound effects) corresponding to the Korean reading program execution result screen by the control unit (150).

The control unit (controller or microcontroller unit (MCU)) (150) performs overall control functions of the terminal device (100) for executing Korean reading program.

Further, the control unit (150) executes the overall control function of the terminal device (100) for executing Korean reading program using the program and data stored in the storage unit (120).

The control unit 150 may include RAM, ROM, CPU, GPU, and a bus, and the RAM, ROM, CPU, GPU, etc. may be connected to each other through a bus. The CPU may access the storage unit 120, perform booting using the O/S stored in the storage unit (120), and use various programs, content, data, etc. stored in the storage unit (120) to perform various operations.

Additionally, the control unit 150 installs a Korean reading program (app) provided from an external server on the terminal device (100).

Further, when a dedicated app (or application) installed on the terminal device (100) for executing Korean reading program is selected (or touched/executed by the user) according to user selection (or user touch/input), the control unit (150) executes the corresponding dedicated app and displays the app execution result screen on the display unit (130).

More specifically, the control unit (150) includes a word search and identification unit (151), a phoneme combination unit (152), a combination exercise unit (153), and an interface execution unit (154).

The word search and identification unit (151) supports a word search and identification interface (11) for searching for English words included in various fields and categories (see FIG. 3).

Here, the word search and identification interface (11) supports categories that classify various fields into (large) and (medium). As an example, the category (large) may include 'animal', 'city', 'cloths', 'culture', 'food', 'living', etc., and the category (medium) supports words related to the field specified in the category (large).
further, the word search and identification interface (11) supports to display that various field categories and their corresponding English words may be arranged vertically in alphabetical order at the beginning of the English word or may be arranged vertically at random.

At this time, if one of the categories in various fields and the English words belonging to them is selected as a word of interest in the word search and identification interface (11), the word search and identification unit (151) may support the translated word of the selected word of interest to be flickered and displayed, or a color of the translated word to vary within a rectangular border in the word search and identification interface (11).

Here, the word search and identification interface (11) supports a up and down scroll bar to allow the user to select a desired word through the up and down scroll bar.

Next, the phoneme combination unit (152) may be configured to be linked with the word search and identification unit (151) and to support information about the process (order) of combining phonemes for the syllable of the selected translated word.

Here, the phoneme combination unit (152) may be configured to support a phoneme combination interface (12) that changes key color for phonemes that are sequentially combined, provides pronunciations of the phonemes that vary, extracts and provides phonetic symbols and pronunciation information for the syllable in which the respective phonemes are combined from the storage unit, and extracts and provides phonetic symbols and pronunciation information of words combined into syllables from the storage unit (see FIG. 3).

Here, the phoneme combination interface (12) supports an interface (12) displaying identification item information to identify single consonants (SC), double consonants (DC), single vowels (SV), and double vowels (DV) for each syllable phoneme of the translated word searched in a word search interface.

Further, the phoneme combination interface (12) supports an interface (12-1) supporting the first display area (A), the second display area (B), the third display area (C), and the fourth area (D) showing ingle consonants (SC), double consonants (DC), single vowels (SV), and double vowels (DV) for each syllable phoneme of the translated word searched in a word search interface.

Here, the first display area (A) may be an area where consonants used as initial consonants are displayed, and single consonants and compound consonants supporting different colors are displayed.

The second display area (B) may be an area where middle vowels are displayed, and single vowels and double vowels supporting different colors are displayed.

The third display area (C) may be an area where consonants used as last consonants are displayed, and single consonants and compound consonants supporting different colors are displayed, and be an area that displays and distinguishes 11 secondary double consonants in different colors, the 11 secondary double consonants being not used as initial consonants but only used as last consonants.

The fourth display area (D) may be an area where syllables and phonetic symbols combined with phonemes displayed in the first display area (A) to the third display area (D) are displayed and be an area where syllables constituting a word are displayed in a different color to distinguish them.

Next, when the practice icon among the icons (including name, pronunciation, practice, abbreviation, foreign word) supported by the Korean reading program (10) is activated, the combination exercise unit 153 may be configured to be operated to combine the phoneme key information input through the phoneme combination interface (12) to generate a syllable and provide information on the generated syllable to a word search unit. At this time, the word search and identification interface (11) displays a word that is a combination of at least one phoneme key that has been input.

Next, the interface execution unit (154) supports the word search and identification interface (11) and the phoneme combination interface (12) to be interconnected (e.g., sequentially executed or reversely executed).

Hereinafter, a method of driving a terminal executing a Korean reading program according to an embodiment of the present invention is briefly described.

A method of driving a terminal executing a Korean reading program according to an embodiment of the present invention includes a category search process, a word search and identification process, and a phoneme combination process.

The category search process may be a process of determining a category of interest by scrolling up and down the words meaning the category of the word search and identification interface (11). Here, a rectangular border appears around the designated word and the color changes.

The word search and identification process may be a process of scrolling words up and down to determine a word of interest. Here, a rectangular border appears around the designated word and the color changes.

The phoneme combination process may be a process in which the phonemes that make up a syllable are displayed in sequential order with changing colors when a word selected in the phoneme combination interface (12) is pressed.

At this time, a pronunciation is formed during the phoneme combination process, and when the combination is completed and a syllable is visible, phonetic symbols are displayed and the pronunciation is output.

The combination exercise process may be a process of performing the category search process, word search and identification process, and phoneme combination process in reverse order.

More specifically, it may be a process of pressing phoneme keys in order to generate syllables and combining the syllables to generate a word.

For example, if the phoneme keys in the first to third display areas of the phoneme combination interface (12) are pressed in order of initial consonant, middle vowel, and consonant, syllables and pronunciation symbols may be displayed in the fourth display area.

According to a terminal device for executing Korean reading program and a method of operating the same according to an embodiment of the present invention, it provides the advantage of enabling accurate Korean pronunciation and reading by teaching Korean using English phonetic symbols and teaching how to notate a foreign language in Korean and hearing the pronunciation according to the notating.

Accordingly, through the above-mentioned advantages, it provides the advantage of being able to learn Korean more effectively for foreigners.

The term "unit" used in one embodiment of the present invention may be implemented as a hardware component, a software component, and/or a combination of hardware components and software components. For example, devices and components described in the embodiments may be implemented using, for example, a processor, a controller, an arithmetic logic unit (ALU), a digital signal processor, a microcomputer, a field programmable array (FPA), or one or more general purpose or special purpose computers, such as any other device capable of executing and responding to instructions. The processing device may execute an operating system (OS) and one or more software applications running on the operating system. Further, the processing device may access, store, manipulate, process, and generate data in response to execution of software. For convenience of understanding, there are cases in which one processing device is used, but those skilled in the art will understand that the processing device includes a plurality of processing elements and/or a plurality of types of processing elements. For example, a processing device may include a plurality of processors or a processor and a controller. It may also include other processing configurations, such as parallel processors.

Software may include a computer program, program code, instructions, or some combination thereof, for independently or collectively instructing or configuring a hardware device to operate as desired. Software and/or data may be embodied permanently or temporarily in any type of machine, component, physical or virtual equipment, or computer storage medium or device, or transmitted signal wave, capable of providing instructions or data to, or being interpreted by a processing device. The software also may be distributed over network coupled computer systems so that the software is stored and executed in a distributed fashion. Software and data may be stored on one or more computer readable media.

The method according to the embodiment of the present invention may be implemented in the form of program instructions that can be executed through various computer means and recorded in a computer readable medium. The computer readable recording medium may include program instructions, data files, data structures, etc. alone or in combination. Program instructions recorded on the medium may be those specially designed and configured for the present invention, or those known and usable to those skilled in the art of computer software. Examples of computer-readable recording media include magnetic media such as hard disks, floppy disks and magnetic tapes, optical recording media such as CD-(ROMs and DVDs, and magneto-optical media such as floptical disks, and hardware devices specially configured to store and execute program instructions, such as ROM, (RAM, flash memory, and the like. Examples of program instructions include high-level language codes that can be executed by a computer using an interpreter or the like as well as machine language codes generated by a compiler. The hardware device may be configured to act as one or more software modules to perform operation according to the present invention and vice versa.

The contents described above may be modified and changed by those skilled in the art without departing from the essential characteristics of the present invention. Therefore, the present invention is not intended to limit the technical idea of the present embodiment, but to explain, and the scope of the technical idea of the present invention is not limited by these embodiments. The scope of protection of the present invention should be interpreted according to the claims below, and all technical ideas within the scope equivalent thereto should be construed as being included in the scope of rights of the present invention.

### [Description of reference numbers]

100: terminal device for executing a Korean reading program
110: communication unit
120: storage unit
130: display unit
140: speech output unit
150: control unit
151: word search and identification unit
152: phoneme combination unit
153: combination exercise unit
154: interface execution unit

## Claims

1. A terminal device for executing a Korean reading program, the terminal device comprising:
a word search and identification unit providing a word search and identification interface to support a field-specific category and a translated word of a word of interest specified by a user from among English words belonging to the field-specific category and to support the translated word to be flickered and displayed, or a color of the translated word to vary within a rectangular border;
a phoneme combination unit interworking with the word search and identification unit and providing a phoneme combination interface to support information regarding a combination step (order) of phonemes for syllables of the translated word and pronunciation information and phonetic symbols regarding the phonemes and syllables to be output; and
a combination exercise unit combining phoneme key information input via an interface provided by the phoneme combination unit to generate syllables and combining the generated syllable information into a word.

2. The terminal device for executing a Korean reading program of claim 1,
wherein the word search and identification interface supports a up and down scroll bar to allow the user to select a desired word through the scroll bar.

3. The terminal device for executing a Korean reading program of claim 1,
wherein the phoneme combination unit changes key color for phonemes that are sequentially combined, provides pronunciations of the phonemes that vary, extracts and provides phonetic symbols and pronunciation information for the syllable in which the respective phonemes are combined from the storage unit, and extracts and provides phonetic symbols and pronunciation information of words combined into syllables from the storage unit.

4. The terminal device for executing a Korean reading program of claim 1,
wherein the phoneme combination interface supports identification item information to identify single consonants (SC), double consonants (DC), single vowels (SV), and double vowels (DV) for each syllable phoneme of the translated word searched in a word search interface.

5. The terminal device for executing a Korean reading program of claim 1,
wherein the combination exercise unit combines the phoneme key information input through the phoneme combination interface to generates syllables and provides information of the generated syllable to a word search unit, and
wherein the word search and identification interface displays words that are a combination of one or more phoneme keys input.

6. The terminal device for executing a Korean reading program of claim 4,
wherein the phoneme combination interface includes a first display area, a second display area, and a third display area, and
wherein the first display area is an area where consonants used as initial consonants are displayed, and single consonants and compound consonants supporting different colors are displayed,
the second display area is an area where middle vowels are displayed, and single vowels and double vowels supporting different colors are displayed,
the third display area is an area where consonants used as last consonants are displayed, and single consonants and compound consonants supporting different colors are displayed, and
the third display area is an area that displays and distinguishes 11 secondary double consonants in different colors, the 11 secondary double consonants being not used as initial consonants but only used as last consonants.
